# EUROPEAN PATENT SPECIFICATION

(11) **EP 2 931 563 B1**
(45) Date of publication and mention of the grant of the patent: **15.11.2017**
(21) Application number: 12889805.3
(22) Date of filing: 14.12.2012
(51) Int. Cl.: B60R 19/20, B60R 21/20

(54) **VEHICLE CRASH RETARDATION STRUCTURE ARRANGEMENT**
STRUKTURANORDNUNG ZUR KRAFTFAHRZEUGAUFPRALLVERZÖGERUNG
AGENCEMENT DE STRUCTURE RETARDATRICE DANS UN CHOC DE VÉHICULE

(43) Date of publication of application: 21.10.2015
(73) Proprietor: Autoliv Development AB, 447 83 Vårgårda (SE)
(72) Inventor: ZAURITZ, Ralf, 83607 Holzkirchen (DE); EWERT, Jochen, 85221 Dachau (DE)
(74) Representative: Awapatent AB
(86) International application number: PCT/SE2012/051392
(87) International publication number: WO 2014/092620

(56) References cited:
- EP-A1- 2 465 735
- WO-A1-98/50254
- DE-A1-102008 051 565
- DE-A1-102011 055 385
- FR-A- 1 402 868
- KR-A- 20090 015 210
- US-A1- 2010 052 294

## Description

### Technical Field of the Invention

The present invention relates to a vehicle crash retardation structure arrangement comprising an inflatable structural element arranged to increase the length of a vehicle crumple zone, and a gas generating source arranged to, upon activation, inflate the inflatable structural element.

### Background Art

In order to minimize the risk of injuries to a vehicle occupant in a crash situation, the vehicle occupant should be decelerated at as low peak and mean deceleration levels as possible. A typical vehicle is provided with a crumple zone which is designed to be crushed or deformed during an accident situation, thereby reducing the overall crash pulse of the vehicle. The crumple zone may effectively be associated with the front bumper of the vehicle. The crumple zone is designed to be "softer" than the cabin of the vehicle with the intention that the crumple zone should absorb energy whilst the cabin of the vehicle remains un-deformed to protect the occupant. The length of a vehicle may be regarded as being a critical measure that due to different reasons may lead to restrictions on the available crumple zone length.

Furthermore, vehicles are designed to be soft in the nose, i.e. in front of the bumper cross beam to reduce the risk of injuries to pedestrians in the event of a car-pedestrian crash.

Thus, nose softness and restricted crumple zone length make it difficult to reduce the overall crash pulse of a vehicle.

### Summary of the Invention

It is an object of the present invention to overcome the above described drawback and to provide an improved vehicle structure arrangement.

This and other objects that will be apparent from the following summary and description are achieved by a vehicle crash retardation structure arrangement according to the appended claims. WO098/50254A1 discloses a vehicle crash retardation structure according to the preamble of claim 1. According to an aspect of the present disclosure, there is provided a vehicle crash retardation structure arrangement comprising an inflatable structural element arranged to increase the length of a vehicle crumple zone, and a gas generating source arranged to, upon activation, inflate the inflatable structural element, wherein the vehicle crash retardation structure arrangement furher comprises a support surface supporting the inflatable structural element, and a packing space for accommodating the inflatable structural element, wherein the packing space at least partly extends behind the support surface as seen in a crash direction.

By increasing the length of the crumple zone the overall crash pulse of the vehicle may be reduced. The risk of injuries to a vehicle occupant in a crash situation may thus be reduced. It has been found that expandable metal structures tend to rupture either during deployment, or when compressed by impact forces in a crash, if the structure is packed with sharp radii. This fact makes it difficult to provide a flat folded expandable structure, i.e. an expandable structure which would require a very space-efficient packing space. In order to avoid rupture issues during and after deployment a certain packing space allowing the structure to be packed without sharp radii is therefore required. The packing space extends at least partly behind the support surface as seen in a longitudinal direction of the vehicle which enables the inflatable structural element to, at least partly, be packed behind the support surface. This makes it possible to increase the length of a vehicle crumple zone significantly, although the inflatable structure is packed such that rupture and/or integrity issues during deployment is avoided, i.e. packed with radii being larger than a minimum radius. The minimum radius is determined by factors such as the material and thickness of the part(s) forming the inflatable structural element.

Hence, an active structure, in the form of an inflatable structural element, that may be inflated by the gas generating source and deformed by impact forces in a very robust manner and which may lengthen a vehicle crumple zone significantly is provided.

According to one embodiment the support surface is integrally formed in a transversally extending structural member, such as e.g. a bumper cross beam or a bumper cross member. The transversally extending structural member may thus be a bumper cross beam for the front- or rear area of a motor vehicle. In this embodiment the support surface is thus an integral part of e.g. a front- or rear bumper cross beam, which enables a very robust arrangement having few parts. Furthermore, this allows the arrangement to be mounted in an easy manner. Preferably, the cross beam then comprises a W-shaped profile, wherein a portion of the W-shaped cross beam portion forms the support surface.

According to one embodiment the arrangement comprises a transversally extending structural member, e.g. in the form of a bumper cross beam or a bumper cross member, and a separate support element connected thereto, wherein the support surface forms a part of the separate support element. Preferably, the separate support element is W-shaped. The bumper cross beam may be a front bumper cross beam or a rear bumper cross beam, i.e. a bumper cross beam for the front- or rear area of a motor vehicle.

Preferably, the inflatable structural element is secured to the support surface, which enables a very robust fixation of the inflatable structural element. The inflatable structural element may be attached to the support surface by suitable fastening means, such as e.g. bolts, screws or rivets, or by welding.

According to one embodiment the inflatable structural element is elongated and extends over substantially the whole vehicle width.

According to the invention the inflatable structural element is formed of metal, such as steel or aluminium. Such a structure provides for a very robust arrangement. Furthermore, it provides for an efficient arrangement since the inflatable element may withstand a high pressure level and thus may contribute to reduce the vehicle crash pulse significantly.

According to one embodiment the inflatable structural element is a metal airbag.

Preferably at least a major part of the inflatable structural element is packed behind the support surface as seen in the crash direction. Hence, almost no packing space in front of the support surface may be needed which allows lengthening of a crumple zone in a very efficient manner.

According to one embodiment the arrangement comprises at least two inflatable structural elements, wherein the two elements together extend over substantially the whole vehicle width. This embodiment has the advantage that one of the inflatable elements may be activated separately, e.g. in an offset collision with another vehicle.

These and other aspects of the invention will be apparent from and elucidated with reference to the claims and the embodiments described hereinafter.

### Brief Description of the Drawings

The invention will hereafter be described in more detail and with reference to the appended schematic drawings.
Fig. 1 is a perspective view illustrating a motor vehicle provided with a crash retardation structure arrangement according to an embodiment of the present disclosure.
Fig. 2a is a schematic cross sectional view illustrating the crash retardation structure arrangement shown in Fig. 1.
Fig. 2b is a schematic cross sectional view illustrating the crash retardation structure arrangement shown in Fig. 1 in a deployed state.

### Detailed Description of Preferred Embodiments of the Invention

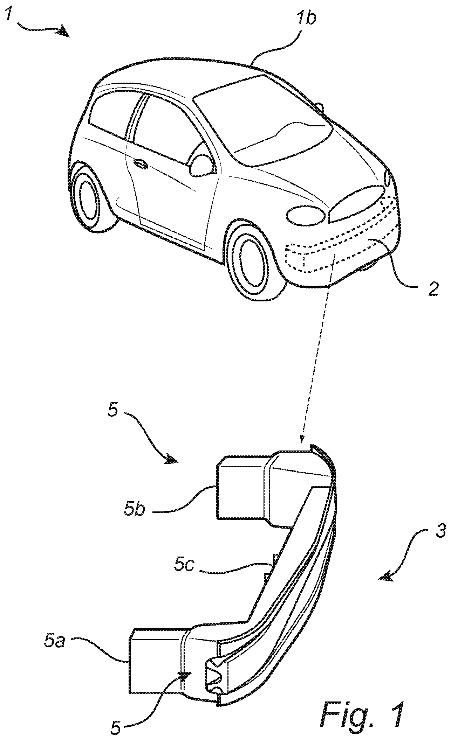

Fig. 1 shows a vehicle 1 provided with a vehicle crash retardation structure arrangement 3 according to an embodiment of the present invention. The front subframe of the vehicle 1 comprises a transversally extending structural member in the form of a bumper cross beam 5. The bumper cross beam 5 has connection portions 5a, 5b which are attached to and supported by collapsible longitudinal structural members (not shown) of the front subframe of the vehicle 1. The collapsible longitudinal structural members, also referred to as crash boxes, are adapted to form a crumple zone in which collision energy is absorbed during an impact event, such as in a collision with another vehicle. The crumple zone thus reduces the deceleration of an occupant inside the occupant compartment 1b during an impact event. Consequently, the risk of injuries to the vehicle occupant(s) is reduced. A central part 5c of the bumper cross beam 5 is attached to and supported by a structural part (not shown) of the front subframe.

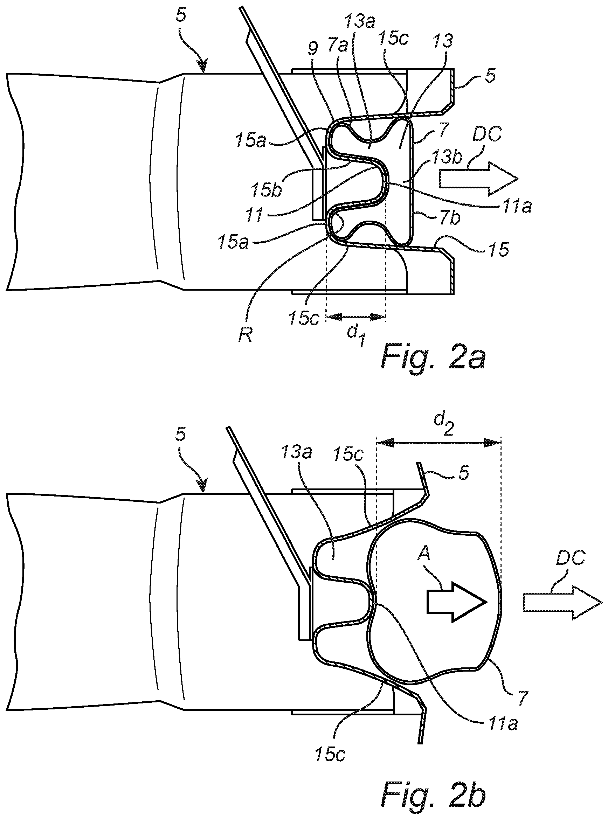

The vehicle 1 is designed to be "soft" in the nose 2, i.e. in front of the bumper cross beam 5, to reduce the risk of injuries to pedestrians in the event of a car-pedestrian crash. Hence, in front of the cross beam 5 soft structures are mounted and supported by the cross beam 5. For clarity reasons theese soft structures are not shown in Figs. 2a-b.

Fig. 2a is a schematic cross sectional view illustrating the vehicle crash retardation structure arrangement 3. The vehicle crash retardation structure arrangement 3 comprises an elongated inflatable structural element 7, in the form of a metal airbag, which is attached to the bumper cross beam 5 and covers the whole width thereof. As illustrated in Figs. 2a-b a portion 9 of the cross beam 5 is W-shaped. A central portion 11 of the W-shaped cross beam portion 9 of the cross beam forms a support surface 11a supporting the inflatable structural element 7.

The inflatable structural element 7 may be attached to the cross beam 5 by any suitable fastening means, such as e.g. bolts, screws or rivets or by welding. In this embodiment the inflatable structure 7 is attached to the central portion 11 of the W-shaped portion 9 by means of screws (not shown). It is however appreciated that the inflatable structural element 7 may be attached to another portion of the cross beam 5.

By way of an example a potential crash direction DC, which is parellel to the longitudinal direction of the vehicle 1, is illustrated in Figs. 2a-b.

The W-shaped cross beam portion 9 forms a packing space 13 for accommodating the inflatable structural element 7. A first part 7a of the inflatable structural element 7 is packed in a first subspace 13a of the packing space 13. The first subspace 13a is formed behind the support surface 11a, as seen in the crash direction DC. A second part 7b of the inflatable structural element 7 is packed in a second subspace 13b of the packing space 13, the second subspace 13b being formed in front of the support surface 11a. Preferably, a major part of the inflatable structural element 7 is accommodated in the first subspace 13a formed behind the support surface 11a.

The W-shaped cross beam portion 9 thus forms a housing 15 in which the metal airbag 7 is accommodated. The housing 15 comprises a floor portion 15a and a support portion 15b. The support surface 11a, which is comprised in the support portion 15b, is offset from the floor portion 15a as seen in the crash direction DC. The first subspace 13a thus extends between the floor portion 15a and the support surface 11a as seen in the crash direction DC.

In order to increase the crumple zone of the vehicle 1 as much as possible it is advantageous to arrange the support surface 11a as far forward as possible on the vehicle front subframe. The W-shaped cross beam portion 9 allows the inflatable structure 7 to be arranged in a forward position with respect to the floor portion 15a, thereby enabling the vehicle crumple zone to be lengthen by the inflatable structural element 7 in an efficient manner. The housing 15 comprises a wall portion 15c having two side walls supporting the inflated structural element 7, illustrated in Fig. 2b, when subjected to load during an impact event.

The inflatable structural element 7 is packed with minimum radii to avoid rupture and/or integrity issues during and after deployment. Preferably, the inflatable structure is packed with radii being equal to or larger than a minimum radius R, illustrated in Fig. 2a. By way of an example, with a material thickness of 0.7 mm, a minimum radius of 5 mm is preferred.

The retardation structure arrangement 3 furher comprises a gas generating source (not shown) arranged to, upon activation, inflate the inflatable structural element 7. The gas generating source, i.e. the inflator, is well known in the art and may be of the pyrotechnic, packed gas, hybrid or fluid fueled type. For instance, the inflator may be of a cylindrical airbag type. The inflator is activated by a sensor signal from a sensor system (not shown). To this end the gas generating source is provided with an initiator device (not shown), e.g. in the form of a pyrotechnical squib, of a type known in the art.

As mentioned hereinbefore the inflatable structural element 7 is arranged to, upon deployment, increase the length of the vehicle crumple zone. Upon deployment of the inflator the structural element 7 is filled with gas to a pressure of approximately 20 bar. The pressurized structure 7 form part of the vehicle crumple zone and contributes to reduce the vehicle crash pulse. In the inflated state, illustrated in Fig. 2b, the length of the vehicle crumple zone is increased, as schematically illustrated by d₂ in Fig. 2b. By increasing the crumple zone length the occupant deceleration may be reduced and thus the risk of injuries to the occupant may be reduced. The inflator may be arranged inside the active structure 7 or on the cross beam 5.

In order to fully utilize the retardation potential of the arrangement 3 the inflatable structural element 7 need to be fully inflated prior to the impact. It is thus not sufficient to await an in-crash sensor signal. To this end the gas generating source is adapted to receive an activation signal from a pre-crash based sensor system. However, the active structure, i.e. the inflatable structural element 7, may require as little as about 20 milliseconds to be fully inflated. Hence, such a pre-crash signal can be received just prior to 20 milliseconds from estimated impact time.

The sensor system may comprise a sensor being capable of sensing various parameters in an anticipated crash situation. The sensor may e.g. be a doppler radar to sense the speed of the vehicle relative to an object which will be involved in a crash situation. The system should e.g. be activated if the sensed object is another vehicle. If the sensed object is a pedestrian the system should however not be activated. Hence, any type of sensor that can predict or sense an accident, and that can somehow assess the type of a potentially impacting object may be used.

As illustrated in Figs. 2a-b the active structure 7 is thus expandable from a packed state to an expanded state. In the expanded state, illustrated in Fig. 2b, the metal structure 7 lengthens the vehicle crumple zone, thereby enabling reduction of the retardation of a vehicle occupant in a crash situation.

It is realized by a person skilled in the art that features from various embodiments disclosed herein may be combined with one another in order to provide further alternative embodiments.

Hereinbefore, it has been described that the support surface is an integral part of a cross beam. It is however appreciated that the support surface may be comprised in a separate support element. For instance the support surface may form a part of a separate W-shaped profile element or housing. Such a separate profile element or housing may be arranged e.g. in a U-shaped cavity of a vehicle cross beam. Then, the W-shaped element forms a housing which accommodates the inflatable structural element. The inflator may then be arranged inside the active structure, on the cross beam or on the separate support element.

Hereinbefore, a crash direction DC being parallel to the longitudinal direction of the vehicle has been described. It is however appreciated that such a crash direction may be angled with respect to the longitudinal direction of the vehicle, i.e. in an oblique crash situation.

## Claims

1. A vehicle crash retardation structure arrangement comprising
an inflatable structural element (7) arranged to increase the length of a vehicle crumple zone,
a gas generating source arranged to, upon activation, inflate the inflatable structural element (7),
a support surface (11a) supporting the inflatable structural element (7), and
a packing space (13) for accommodating the inflatable structural element (7), whereby the packing space (13a) at least partly extends behind the support surface (11a) as seen in a crash direction (DC), **characterized in that**
the inflatable structural element (7) is formed of metal, such as steel or aluminium.

2. A vehicle crash retardation structure arrangement according to claim 1, wherein the support surface (11a) is integrally formed in a bumper cross beam (5), wherein a portion (11) of the cross beam (5) forms the support surface (11a).

3. A vehicle crash retardation structure arrangement according to claim 2, wherein the bumper cross beam (5) comprises a W-shaped profile (9).

4. A vehicle crash retardation structure arrangement according to any of the claims 2-3, wherein the bumper cross beam (5) is a front bumper cross beam (5).

5. A vehicle crash retardation structure arrangement according to claim 1, wherein the arrangement comprises a bumper cross beam and a support element connected to the bumper cross beam, wherein the support surface forms a part of the support element.

6. A vehicle crash retardation structure arrangement according to claim 4, wherein the support element is W-shaped.

7. A vehicle crash retardation structure arrangement according to any of the preceding claims, wherein the inflatable structural element (7) is secured to the support surface (11a).

8. A vehicle crash retardation structure arrangement according to any of the preceding claims, wherein the inflatable structure is elongated and extends substantially over the whole vehicle width.

## Patentansprüche

1. Strukturanordnung zur Fahrzeugaufprallverzögerung, umfassend:
ein aufblasbares Strukturelement (7), das so angeordnet ist, dass es die Länge einer Fahrzeugknautschzone vergrößert,
eine Gaserzeugungsquelle, die so angeordnet ist, dass sie bei Aktivierung das aufblasbare Strukturelement (7) aufbläst,
eine Abstützfläche (11a), die das aufblasbare Strukturelement (7) abstützt, und
einen Packraum (13) zum Aufnehmen des aufblasbaren Strukturelements (7),
wobei
der Packraum (13a) in einer Aufprallrichtung (DC) betrachtet zumindest teilweise hinter der Abstützfläche (11a) verläuft, **dadurch gekennzeichnet, dass**
das aufblasbare Strukturelement (7) aus Metall, beispielsweise Stahl oder Aluminium, geformt ist.

2. Strukturanordnung zur Fahrzeugaufprallverzögerung nach Anspruch 1, wobei die Abstützfläche (11a) einstückig in einem Stoßfängerquerträger (5) ausgebildet ist, wobei ein Abschnitt (11) des Querträgers (5) die Abstützfläche (11a) bildet.

3. Strukturanordnung zur Fahrzeugaufprallverzögerung nach Anspruch 2, wobei der Stoßfängerquerträger (5) ein W-förmiges Profil (9) umfasst.

4. Strukturanordnung zur Fahrzeugaufprallverzögerung nach Anspruch 2 oder 3, wobei der Stoßfängerquerträger (5) ein Frontstoßfängerquerträger (5) ist.

5. Strukturanordnung zur Fahrzeugaufprallverzögerung nach Anspruch 1, wobei die Anordnung einen Stoßfängerquerträger und ein mit dem Stoßfängerquerträger verbundenes Abstützelement umfasst, wobei die Abstützfläche einen Teil des Abstützelements bildet.

6. Strukturanordnung zur Fahrzeugaufprallverzögerung nach Anspruch 4, wobei das Abstützelement W-förmig ist.

7. Strukturanordnung zur Fahrzeugaufprallverzögerung nach einem der vorhergehenden Ansprüche, wobei das aufblasbare Strukturelement (7) an der Abstützfläche (11a) gesichert ist.

8. Strukturanordnung zur Fahrzeugaufprallverzögerung nach einem der vorhergehenden Ansprüche, wobei die aufblasbare Struktur länglich ist und im Wesentlichen über die gesamte Fahrzeugbreite verläuft.

## Revendications

1. Agencement de structure retardatrice dans un choc de véhicule comprenant
un élément de construction gonflable (7) agencé pour augmenter la longueur d'une zone déformable de véhicule,
une source de génération de gaz agencée pour, lors de l'activation, gonfler l'élément de construction gonflable (7),
une surface de support (11a) supportant l'élément de construction gonflable (7), et un espace de rangement (13) pour recevoir l'élément de construction gonflable (7),
dans lequel
l'espace de rangement (13a) s'étend au moins partiellement derrière la surface de support (11a), vu dans une direction de choc (DC), **caractérisé en ce que** l'élément de construction gonflable (7) est constitué de métal, tel que de l'acier ou de l'aluminium.

2. Agencement de structure retardatrice dans un choc de véhicule selon la revendication 1, dans lequel la surface de support (11a) est formée d'un seul tenant dans une poutre transversale de pare-chocs (5), une portion (11) de la poutre transversale (5) formant la surface de support (11a).

3. Agencement de structure retardatrice dans un choc de véhicule selon la revendication 2, dans lequel la poutre transversale de pare-chocs (5) comprend un profilé en forme de W (9).

4. Agencement de structure retardatrice dans un choc de véhicule selon l'une quelconque des revendications 2-3, dans lequel la poutre transversale de pare-chocs (5) est une poutre transversale de pare-chocs (5) avant.

5. Agencement de structure retardatrice dans un choc de véhicule selon la revendication 1, dans lequel l'agencement comprend une poutre transversale de pare-chocs et un élément de support relié à la poutre transversale de pare-chocs, la surface de support formant une partie de l'élément de support.

6. Agencement de structure retardatrice dans un choc de véhicule selon la revendication 4, dans lequel l'élément de support est en forme de W.

7. Agencement de structure retardatrice dans un choc de véhicule selon l'une quelconque des revendications précédentes, dans lequel l'élément de construction gonflable (7) est fixé à la surface de support (11a).

8. Agencement de structure retardatrice dans un choc de véhicule selon l'une quelconque des revendications précédentes, dans lequel la structure gonflable est allongée et s'étend sensiblement sur toute la largeur du véhicule.
